# EUROPEAN PATENT APPLICATION

(11) **EP 3 121 950 A1**
(43) Date of publication of application: **25.01.2017**
(21) Application number: 16180623.7
(22) Date of filing: 21.07.2016
(51) Int. Cl.: H02N 2/18, F03G 5/06, E04B 5/00

(54) **IMPROVEMENTS IN OR RELATING TO FLOOR COVERINGS**

(30) Priority: 22.07.2015 GB 201512925
(71) Applicant: Altro Limited, Letchworth Garden City Hertfordshire SG6 1NW (GB)
(72) Inventor: Peace, Richard John, Letchworth, Hertfordshire SG6 1NW (GB); Hall, Barry Peter, Letchworth, Hertfordshire SG6 1NW (GB); Patsavellas, Ioannis, Letchworth, Hertfordshire SG6 1NW (GB)
(74) Representative: Peel, James Peter

(57) **Abstract**

Disclosed is an energy harvesting flooring material (100) copmrising a layer of synthetic material (140), an energy harvesting layer (130) and a layer of conductive material; and an energy harvesting system comprising the energy harvesting flooring material, a rectifier and an electrical storage device.

## Description

The present invention provides a synthetic floor covering having a kinetic energy harvesting layer.

The manufacture of synthetic floor coverings is an energy intensive process. Accordingly, there is a need to reduce the carbon footprint of synthetic floor coverings. Indeed, there is a growing need for new buildings to be carbon neutral such that the carbon dioxide generated in their construction may be offset by the building generating renewable energy for example from solar panels or wind turbines. Other sources of energy have been sought to increase the rate at which new buildings become carbon neutral.

Kinetic energy recovery systems are known but are generally bespoke systems built for specific installations. Synthetic floor coverings need to be suitable for manufacture at a high throughput rate for the product to be commercially competitive.

A way of ameliorating these problems has been sought.

According to the invention there is provided an energy harvesting flooring material comprising a layer of synthetic material and an energy harvesting layer.

According to the invention there is further provided an energy harvesting flooring system comprising the energy harvesting flooring material according to the invention, a rectifier and an electrical storage device.

The advantages of the invention include that by providing an energy harvesting layer in a synthetic flooring, it is possible to incorporate energy harvesting features in conventional flooring using conventional manufacturing techniques to harness energy generated by users of buildings.

In some embodiments, the energy harvesting layer may comprise one or more piezoelectric materials.

In some embodiments, the energy harvesting layer may comprise one or more conductive materials. The energy harvesting layer may comprise a layer of conductive material, for example a layer of a metal or of a conductive polymeric material or adhesive, for example a layer of aluminium, copper or conductive phenolic resin. In some embodiments, the conductive material may comprise a conductive ink. In some embodiments, the layer of conductive material may be a printed layer, for example a screen printed layer or a digital inkjet printed layer.

In some embodiments, the energy harvesting layer may comprise a protective layer. The protective layer may be an insulating protective layer.

In some embodiments, the energy harvesting flooring system comprises an electrically powered device to be powered by the electrical storage device. Examples of suitable electrically powered devices include a sensor, a lighting system and/or an alarm system.

In some embodiments, the electrical storage device may be provided in the flooring system or in a wall or ceiling, particularly an adjacent wall or ceiling or in a lower wall area such as skirting or coving.

In some embodiments, the flooring material comprises a protective coating layer. The protective coating layer may be a chemically protective coating layer or an upper layer of a conventional flooring such as a layer of matting, natural or synthetic carpet, ceramic, wood, cork, rubber or stone. Where the protective coating layer is a chemically protective coating layer, the protective coating layer may be thermally curable (e.g. water-based polyurethane or PVDF), a thermally and/or UV curable (e.g. water-based UV curable polyurethane) layer or a UV curable (e.g. a polyacrylate or urethane acrylate) layer.

In some embodiments, the flooring material may be a non-slip flooring material. In some embodiments, the flooring material may comprise a non-slip protective coating layer. A non-slip protective coating layer may comprise one or more non-slip particles. In some embodiments, the particles may be smooth particles. A smooth particle is a particle which has no angular protrusion or indentation, for example a particle which has no protrusion or indentation having an outward facing angle of about 90° or less. In some embodiments, the particles may be one or more of a smooth sphere, bead and grain. The advantage of using a smooth particle in the composition or flooring material according to the invention is that the cured coating is easier to clean as the coating lacks any angular surface in which a cleaning material (for example the fibres of a mop) may be caught.

In some embodiments, a non-slip particle used in the flooring material according to the invention may be one or more of the following types of particle: a glass particle, a silica particle, a polymeric particle (for example Nylon (Trademark)), a ceramic particle (e.g. porcelain) and an aluminium oxide particle. In some embodiments from 15 to 70 weight % of non-slip particle may be used relative to the weight of the materials used to form the layer in which the non-slip particle is included.

In some embodiments, the protective coating layer may include one or more layers. Where the non-slip protective coating layer has two or more layers such that the non-slip protective coating layer has an upper coating layer which provides the non-slip surface and one or more lower coating layers, at least the upper coating layer contains non-slip particles.

In some embodiments, the flooring material used in the invention comprises one or more undercoat layers comprising a plastics material, for example a polymeric material. Examples of suitable plastics material include plasticised PVC, rubber, rubber and a polyolefin, linoleum, plasticised acrylic, and/or a polyolefin. Optionally, the one or more undercoat layers may contain one or more types of slip resistant and/or wear resistant particles such as aluminium oxide, silicon carbide, quartz or glass. Optionally, the one or more undercoat layers may include one or more types of decorative elements such as a coloured chip, fleck and/or flake for example of a coloured polymeric material and/or a printed decorative layer. The flooring material may optionally be embossed.

In some embodiments, a flooring material comprising rubber and a polyolefin may comprise a thermoplastic polymer and an elastomer material. In some embodiments, a thermoplastic polymer may be a polyethylene (for example ultra high molecular weight polyethylene or an ethylene alkane copolymer), an acid copolymer, an ionomer, polystyrene, acrylate (for example ethylene butyl acrylate or ethylene methyl acrylate), acetate (for example ethylene vinyl acetate), PVC, polypropylene and/or polybutylene. In some embodiments, an elastomer may be styrene butadiene rubber, nitrile butadiene rubber, natural rubber, isoprene rubber and/or ethylene propylene rubber. In some embodiments, the flooring material comprising rubber and a polyolefin may additionally comprise a production additive such as a friction reducer for example a silicone. In some embodiments, the flooring material comprising rubber and a polyolefin may additionally comprise a top protective layer of a polyurethane, acrylate, epoxy or a mixture thereof. A suitable flooring material comprising rubber and a polyolefin is disclosed in US2008/053335, the contents of which document is incorporated herein by reference.

In some embodiments, the flooring material comprises a decorative layer. A decorative layer may be a layer of ink or a printed film layer.

The energy harvesting flooring system is generally suitable for use in a building, particularly a building having high footfall such as a municipal building such as a hospital, a library, a court house, a theatre, a shopping centre or mall. The energy harvesting flooring system is also generally suitable for use in a vehicle, particularly a transit vehicle such as a bus, train, aeroplane or ship (for example a ferry). In some embodiments, the energy harvesting flooring system may comprise an energy harvesting flooring material having one or more harvesting areas suitable for placement in a zone of high footfall where the energy harvesting layer comprises a piezoelectric material, optionally one or more conducting areas where the energy harvesting layer comprises a conductive material for connecting the harvesting area to the rectifier and optionally one or more neutral areas where the energy harvesting layer is a non-conductive layer of synthetic material.

The invention will now be described with reference to the following Figures of the accompanying drawings which are not intended to limit the scope of the invention in which:
**Figure 1** shows a schematic cross-section of a first embodiment of a flooring material according to the invention;
**Figure 2** shows a schematic cross-section of a second embodiment of a flooring material according to the invention;
**Figure 3** shows a schematic cross-section of a third embodiment of a flooring material according to the invention;
**Figure 4** shows a schematic cross-section of a fourth embodiment of a flooring material according to the invention;
**Figure 5** shows a schematic cross-section of an energy harvesting layer for use in a flooring material according to the invention;
**Figure 6** shows a schematic overhead plan view of a first embodiment of an energy harvesting flooring system according to the invention;
**Figure 7** shows a schematic overhead plan view of a second embodiment of an energy harvesting flooring system according to the invention;
**Figure 8A** shows a schematic cross-section of a fifth embodiment of a flooring material according to the invention which is in the form of an underlay and a decorative floor covering having a profiled base layer;
**Figure 8B** shows a schematic underneath plan view of the fifth embodiment of a flooring material according to the invention; and
**Figure 9** shows a schematic cross-sectional view of a third embodiment of an energy harvesting flooring system according to the invention.

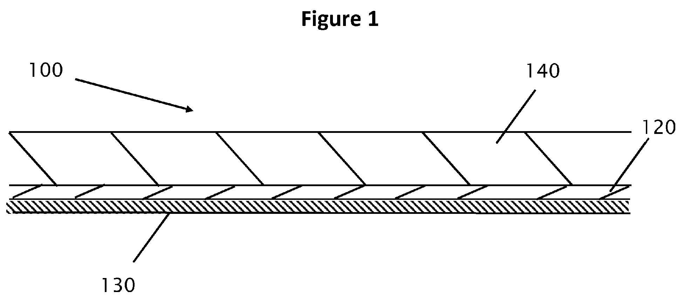

The first embodiment of a flooring material indicated generally at 100 is illustrated in Figure 1. Flooring material 100 has three layers laminated or adhered together. A first layer is an energy harvesting layer 130 comprising one or more sheets of a piezoelectric material. The energy harvesting layer 130 is laminated on a substrate base layer 110 which is a cellulose/polyester support reinforced with a 32 tex glass crennette. On top of the substrate layer 110 there is an overcoat layer 140 which is formed from a plastics material.

As an alternative to the embodiment depicted in Figure 1, the flooring material 100 may omit a substrate layer 110. In a further alternative embodiment, the flooring material may have an undercoat layer arranged between the substrate layer 110 and the overcoat layer 140.

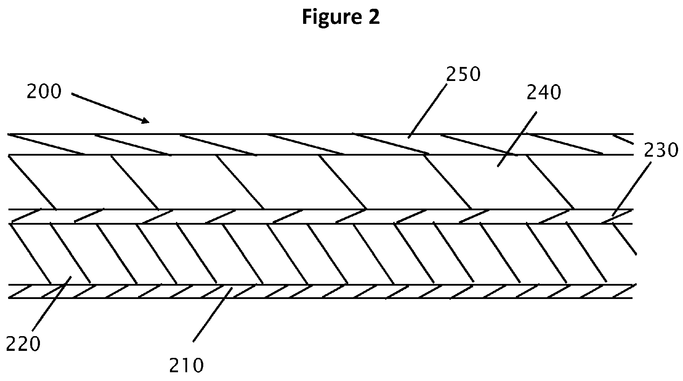

The second embodiment of a flooring material indicated generally at 200 is illustrated in Figure 2. Flooring material 200 has five layers laminated or adhered together. A first layer is a substrate base layer 210 which is a cellulose/polyester support reinforced with a 32 tex glass crennette. On top of the substrate layer 210 there is an undercoat layer 220 which is formed from a plastics material. On top of the undercoat layer 220, there is an energy harvesting layer 230 comprising one or more sheets of a piezoelectric material. On top of the energy harvesting layer 230, there is an overcoat layer 240 which is formed from a plastics material. On top of overcoat layer 240, there is a protective coating layer 250 formed from a plastics material.

As an alternative to the embodiment depicted in Figure 2, the flooring material 200 may omit a substrate layer 210 or an undercoat layer 220. In a further alternative embodiment, the protective coating layer 250 may be a matting layer, a natural or synthetic carpet layer, a ceramic layer, a wood layer, a cork layer, a rubber layer or a stone layer.

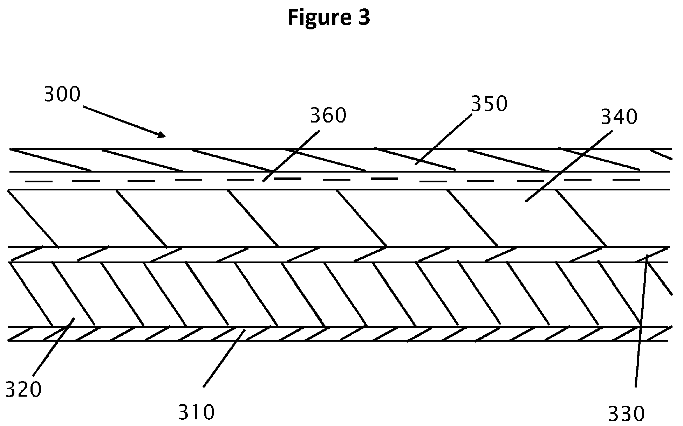

The third embodiment of a flooring material indicated generally at 300 is illustrated in Figure 3. Flooring material 300 has six layers laminated or adhered together. A first layer is a substrate base layer 310 which is a cellulose/polyester support reinforced with a 32 tex glass crennette. On top of the substrate layer 310 there is an undercoat layer 320 which is formed from a plastics material. On top of the undercoat layer 320, there is an energy harvesting layer 330 comprising one or more sheets of a piezoelectric material. On top of the energy harvesting layer 330, there is an overcoat layer 340 which is formed from a plastics material. On top of overcoat layer 340, there is a decorative layer 360 which comprises a layer of ink applied by printing or a printed film. On top of decorative layer 360, there is a protective coating layer 350 formed from a plastics material.

As an alternative to the embodiment depicted in Figure 3, the flooring material 300 may omit a substrate layer 310. In a further alternative embodiment, the protective coating layer 350 may be a matting layer, a natural or synthetic carpet layer, a ceramic layer, a wood layer, a cork layer, a rubber layer or a stone layer.

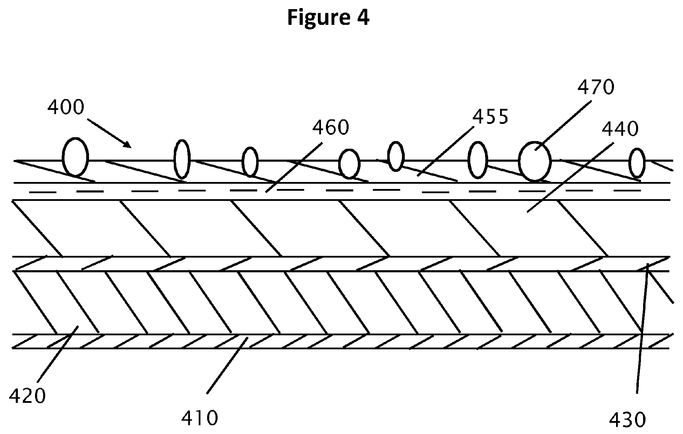

The fourth embodiment of a flooring material indicated generally at 400 is illustrated in Figure 4. Flooring material 400 has six layers laminated or adhered together. A first layer is a substrate base layer 410 which is a cellulose/polyester support reinforced with a 32 tex glass crennette. On top of the substrate layer 410 there is an undercoat layer 420 which is formed from a plastics material. On top of the undercoat layer 420, there is an energy harvesting layer 430 comprising one or more sheets of a piezoelectric material. On top of the energy harvesting layer 430, there is an overcoat layer 440 which is formed from a plastics material. On top of overcoat layer 440, there is a decorative layer 460 which comprises a layer of ink applied by printing or a printed film. On top of decorative layer 460, there is a non-slip protective coating layer 455 formed from a plastics material and comprising one or more abrasive particles 370 which are proud of the non-slip protective coating layer to provide a non-slip effect.

As an alternative to the embodiment depicted in Figure 4, the flooring material 400 may omit a substrate layer 410. In a further alternative embodiment, the protective coating layer 450 may be a matting layer, a natural or synthetic carpet layer, a ceramic layer, a wood layer, a cork layer, a rubber layer or a stone layer.

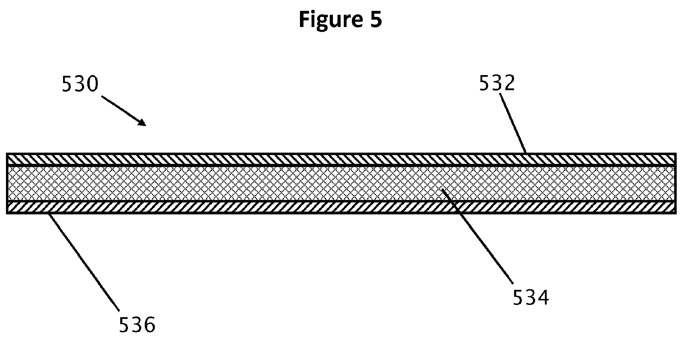

An energy harvesting layer for use in the flooring material according to the invention indicated generally at 530 is illustrated in Figure 5. The energy harvesting layer 530 has three layers which comprise a first conducting layer 532, a piezoelectric layer 534 and a second conducting layer 536 wherein the piezoelectric layer 534 is arranged between the first conducting layer 532 and the second conducting layer 536. The conducting layers 532,536 are formed from a conducting material such as metal, for example copper or aluminium.

The piezoelectric layer 534 is formed from a piezoelectric material such as a natural or synthetic piezoelectric material. Examples of suitable piezoelectric materials include a natural material (for example silk) or a synthetic material (such as a polymeric and/or ceramic material). A suitable polymer comprises poly(vinylidene fluoride), (PVDF), propylene or polyethylene. A suitable ceramic material includes a particle of lead titanate such as lead zirconate titanate(PZT) or PMT-PT, lead potassium niobate, sodium potassium niobate (NKN), bismuth ferrite, sodium niobate, bismuth titanate, sodium bismuth titanate, barium titanate, potassium niobate, lithium niobate, lithium tantalite, sodium tungstate, zinc oxide and/or barium sodium niobate. In some embodiments, the ceramic material may be in the form of a particle. In some embodiments, the piezoelectric layer 534 may comprise one or more polymer layers wherein one or more of the polymer layers comprise a particle of piezoelectric ceramic material.

In an alternative embodiment, the energy harvesting layer 530 may include one or more protective layers to protect and optionally insulate the first and second conducting layers 532,536.

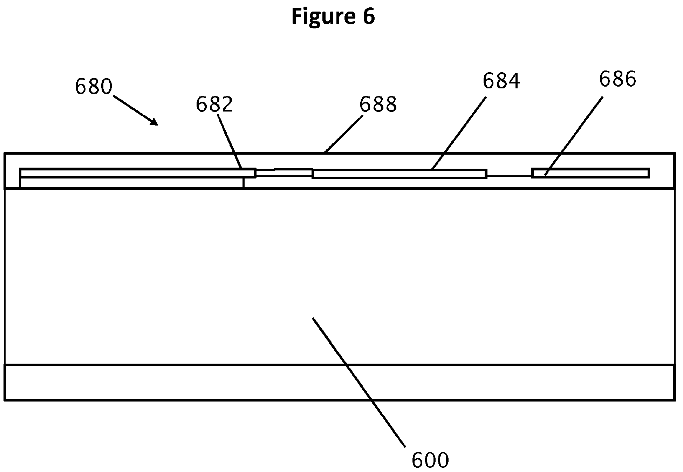

The first embodiment of an energy harvesting flooring system indicated generally at 600 is illustrated in Figure 6. The energy harvesting flooring system 680 comprises a synthetic flooring material 600 and an electrical housing 688 comprising electrical components 682,684,686. The synthetic flooring material 600 may be a synthetic flooring material 100,200,300,400,800A,800B according to an embodiment of the invention.

The electrical components contained by electrical housing 688 include a rectifier 682, electrical storage 684 and a lighting system 686. The rectifier 682 is electrically connected to the energy harvesting layer 630 of the synthetic flooring material to capture energy generated by the energy harvesting layer 630. The rectifier 682 is connected to electrical storage 684 for storage of the electrical energy generated by energy harvesting layer 630. The stored electrical energy may be used in a number of different ways. In this embodiment, the electrical storage 684 is connected to an electrically powered device in the form of lighting system 686 for use of the stored electrical energy.

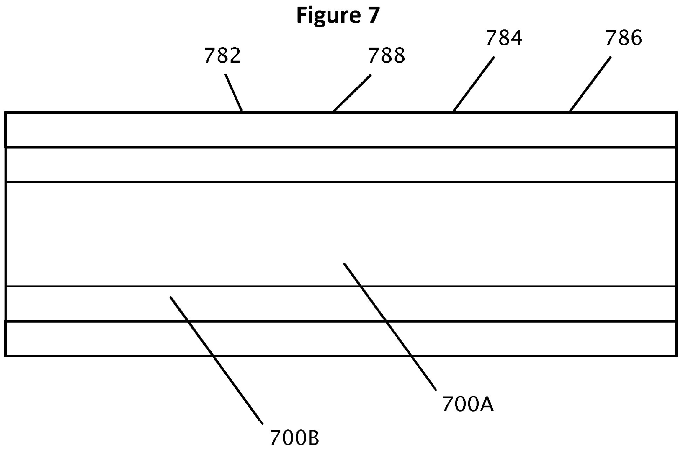

The second embodiment of an energy harvesting flooring system indicated generally at 700 is illustrated in Figure 7. The energy harvesting flooring system 780 comprises two types of synthetic flooring material 700A,700B and an electrical housing 788 comprising electrical components 782,784,786. The synthetic flooring material 700A may be a synthetic flooring material 100,200,300,400,800A,800B according to an embodiment of the invention where the energy harvesting layer 130,230,330,430,830 is an energy harvesting layer 530 as illustrated in Figure 5. The synthetic flooring material 700B may be a synthetic flooring material 100,200,300,400,800A,800B according to an embodiment of the invention where the energy harvesting layer 130,230,330,430,830 is a conducting layer 532.

The electrical components contained by electrical housing 788 include a rectifier 782, electrical storage 784 and a lighting system 786. The rectifier 782 is electrically connected to the energy harvesting layer 730B of the synthetic flooring material 700B. The energy harvesting layer 730B is connected to energy harvesting layer 730A of synthetic flooring material 700A such that the rectifier 782 captures energy generated by the energy harvesting layer 730A. The rectifier 682 is connected to electrical storage 684 for storage of the electrical energy generated by energy harvesting layer 730A. The stored electrical energy may be used in a number of different ways. In this embodiment, the electrical storage 784 is connected to an electrically powered device in the form of lighting system 786 for use of the stored electrical energy.

In an alternative embodiment, the synthetic flooring material 700A,700B may be provided as a single continuous synthetic flooring material having conducting areas marked 700B where the energy harvesting layer 730 is a conducting layer and harvesting areas marked 700A where the energy harvesting layer 730 is an energy harvesting layer as illustrated in Figure 5. In a further alternative embodiment, the synthetic flooring material 700A,700B may have one or more neutral areas where the energy harvesting layer is a layer of plastics material, for example in areas of low footfall where there is a low likelihood of energy harvesting. In a further alternative embodiment, where the energy harvesting layer 730 is a conducting layer, the energy harvesting layer may additionally comprises a layer of synthetic material such that the thickness of the energy harvesting layer 730 is substantially the same as the energy harvesting layer 730 is an energy harvesting layer as illustrated in Figure 5.

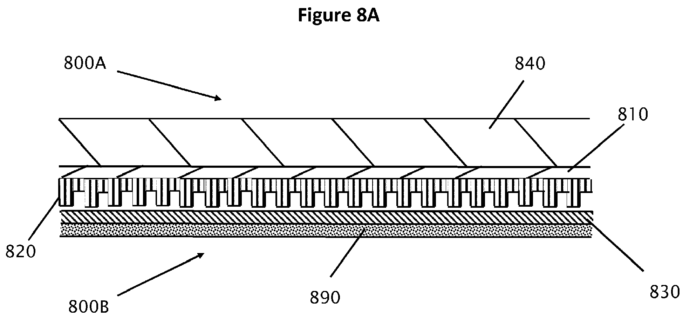

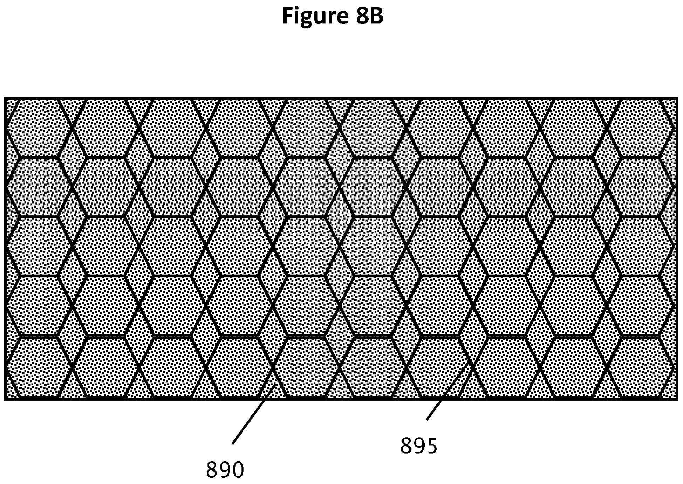

The fifth embodiment of a flooring material indicated generally at 800A is illustrated in Figure 8A. Flooring material 800A has two layers laminated or adhered together and is an underlay for placing underneath a conventional flooring material. A first layer is a deformable layer 890 having a resilient honeycomb shaped support structure 895 shown in Figure 8B. The resilient honeycomb support 895 provides the flooring material 800 with a degree of structure. As the deformable layer 890 is suitable for use in sound attenuation, it needs the support 895 to reduce rolling resistance. It has been found that such a deformable acoustic layer 890 is so deformable that it has a rolling resistance which makes it difficult to roll trolleys or other wheeled objects on it. In an alternative embodiment, where the deformable layer is not as On top of the deformable layer 890, there is an energy harvesting layer 830 comprising one or more sheets of a piezoelectric material. The energy harvesting layer 830 may be laminated, printed or adhered to the deformable layer. In an alternative embodiment, flooring material 800A has a protective layer on top of the energy harvesting layer 830. The deformable layer may be formed from rubber crumb, rubber and polyolefin and/or a plastics material with a blowing agent such as blown PVC. The honeycomb support may be formed from a resilient plastics or metal such as polycarbonate or aluminium.

A floor covering suitable for use with the underlay 800A according to the invention indicated generally at 800B is illustrated in Figure 8A. Floor covering 800B has a decorative upper layer 840, an intermediate scrim layer 810 and a lower layer 820 having a lower surface which is provided with studs or profiles 825. In use, the floor covering 800B is placed on the flooring material 800A such that the studs or profiles 825 ensure maximum deflection of the energy harvesting layer 830 when a person walks on floor covering 800B. Floor covering 800B may be a floor covering as disclosed in WO 03/106783, the contents of which document is incorporated herein by reference.

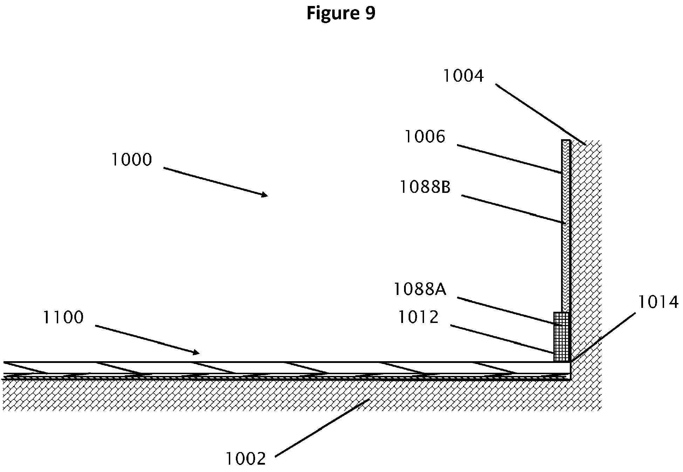

A third embodiment of an energy harvesting flooring system according to the invention indicated generally at 1000 is illustrated in Figure 9. The energy harvesting flooring system has a flooring material 1100, a coving 1012 and a wall covering 1006. The flooring material 1100 is applied to floor substrate 1002. Flooring material 1100 is flooring material 100 according to the first embodiment of the invention described above with reference to Figure 1. Coving 1012 is formed at the foot 1003 of wall substrate 1004. Coving 1012 forms a coving housing 1088A which contains a rectifier (not shown). Wall covering 1006 is applied to wall substrate 1004 above coving 1012. Wall covering forms a wall housing 1088B which contains electrical storage and a lighting system (not shown).

The rectifier (not shown) is electrically connected to the energy harvesting layer (not shown) of the flooring material 1100 to capture energy generated by the energy harvesting layer (not shown). The rectifier (not shown) is connected to electrical storage (not shown) for storage of the electrical energy generated by energy harvesting layer (not shown). The stored electrical energy may be used in a number of different ways. In this embodiment, the electrical storage (not shown) is connected to an electrically powered device in the form of lighting system (not shown) for use of the stored electrical energy.

In an alternative embodiment, the flooring material 1100 may be a flooring material 200,300,400,800A,B according to a different embodiment of the invention.

The invention is further illustrated with reference to the following examples which are not intended to limit the scope of the invention claimed.

### PREPARATIVE EXAMPLE 1

Plastisols having the formulations given in Table 1 were produced as described below.

**TABLE 1**

| Plastisol Formulations | | |
|---|---|---|
| | A. | B. |
| | Weight/kg | Weight/kg |
| PVC polymer | 15 | 20 |
| PVC polymer | 5 | - |
| Di-isodecyl phthalate | 6.5 | 6.5 |

| | A. Weight/kg | B. Weight/kg |
|---|---|---|
| Calcium magnesium carbonate | - | 5 |
| Blend of aliphatic hydrocarbons with a neutral wetting and dispersing component | - | 0.4 |
| Liquid barium zinc preparation containing organic barium compounds | 0.3 | 0.4 |
| A solution of 10,10' oxybisphenoxyarsine in epoxidised soya bean oil | - | 0.2 |
| Black pigment provided as a dispersion of carbon black in a plasticiser | - | 0.02 |

In each case, the ingredients were weighed in to a 50 litre steel vessel and mixed by a trifoil shaft mixer at 100 rpm for 4 minutes and a dissolver shaft at 1800 rpm for 2 minutes. Aluminium oxide particles (from Washington Mills) size F40 (FEPA Standard 42-GB-1984 measurement) were weighed into plastisol B (10% w/w) and mixed.

### PREPARATIVE EXAMPLE 2

Two formulations E and F comprising a polyolefin and a rubber were prepared as follows:

**TABLE 2**

| Polyolefin and Rubber Formulations | | |
|---|---|---|
| | E. Weight/kg | F. Weight/kg |
| Styrene butadiene rubber with 23 molar% styrene content | 22 | - |
| Natural rubber | - | 7 |
| Styrene resin | 9 | 9 |
| Filler | 45 | 45 |
| lonomer | 15 | 20 |
| Ethylene butyl acrylate | 5 | - |
| Production aid | 5 | 5 |

The ingredients listed in Table 2 for each formulation were compounded in a rubber compounder to form a sheet. The sheets were then granulated and calendered in a roller mill to form a second sheet which was then granulated to form granules having a size of from 0.1 to 40 mm.

### PREPARATIVE EXAMPLE 3

Coating compositions C and D for use in the invention were prepared as follows.

A UV curable composition containing from 20 to 30 parts by weight of oxybis(methyl-2,1-ethanediyl) diacrylate, from 10 to less than 20 parts by weight of 2-phenoxyethyl acrylate, from 10 to less than 20 parts by weight of acrylate resin, from 2.5 to 5 parts by weight of (1-methyl-1,2-ethanediyl)bis[oxy(methyl-2,1-ethanediyl)]] diacrylate, from 1 to 5 parts by weight of benzophenone and from 1 to 5 parts by weight of 1-6,hexanedioldiacrylate was mixed together to obtain coating composition C. Non-slip particles in the form of glass particles having a size of about 75 to 106 µm were added to the UV curable mixture at a rate of 15 parts by weight of the glass spheres to 100 parts by weight of the UV curable mixture to obtain coating composition D.

### EXAMPLE 4

In this Example, the preparation of a flooring material as depicted in Figure 1 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before an energy harvesting layer was applied to the substrate layer. The resulting system was laminated together by the application of pressure and heat to produce a flooring material according to the invention.

### EXAMPLE 5

In this Example, an alternative method for the preparation of a flooring material as depicted in Figure 1 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before adhesive was applied to the underside of the substrate layer. An energy harvesting layer was applied to the adhesive. The resulting system was adhered together by the application of pressure to produce a flooring material according to the invention.

### EXAMPLE 6

In this Example, the preparation of a flooring material as depicted in Figure 2 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before an energy harvesting layer and an overcoat layer formed from plastisol A were applied. The resulting system was laminated together by the application of pressure and heat.

Coating composition C was applied by roller to the laminated system at coverage rate of 20 grams per square metre. The coated system was cured using UV radiation to produce a flooring material according to the invention.

### EXAMPLE 7

In this Example, the preparation of a flooring material as depicted in Figure 3 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before an energy harvesting layer, an overcoat layer formed from plastisol A and a wood print PVC film decorative layer were applied. The resulting system was laminated together by the application of pressure and heat.

Coating composition C was applied by roller to the laminated system at coverage rate of 20 grams per square metre. The coated system was cured using UV radiation to produce a flooring material according to the invention.

### EXAMPLE 8

In this Example, the preparation of a flooring material as depicted in Figure 4 is described.

Plastisol B was spread coated onto a substrate layer to a thickness of 1mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before an energy harvesting layer, an overcoat layer formed from plastisol A and a wood print PVC film decorative layer were applied. The resulting system was laminated together by the application of pressure and heat.

Coating composition D was applied by roller to the laminated system at coverage rate of 20 grams per square metre. The coated system was cured using UV radiation to produce a non-slip flooring material according to the invention.

### EXAMPLE 9

In this Example, the preparation of flooring material 800B as depicted in Figure 8 is described.

Granulated formulation E, prepared as described in Preparatory Example 2 was spread over a honeycomb structure on a steel belt in a double belt press and then the material was pressed at a temperature above 130°C such that it was vulcanised. A layer of glue was applied to the rubber layer obtained. An energy harvesting layer was then applied and the resulting system was adhered together by the application of pressure.

### EXAMPLE 10

In this Example, an alternative preparation of flooring material 800B as depicted in Figure 8 is described. In this embodiment, the flooring material lacks the honeycomb structure.

Granulated formulation F, prepared as described in Preparatory Example 2 was spread over a steel belt in a double belt press and then the material was pressed at a temperature above 130°C such that it was vulcanised. An energy harvesting layer was then applied and the resulting system was laminated together by the application of pressure and heat.

### EXAMPLE 11

In this Example, an alternative preparation of flooring material 800B as depicted in Figure 8 is described.

Plastisol A, prepared as described in Preparatory Example 1 but with the addition of gas filled microspheres in the form of Expancel (trademark) manufactured by Akzo Nobel to form a deformable plastics material was spread coated onto a honeycomb structure on a substrate layer to a thickness of 3mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers. A layer of glue was applied to the rubber layer obtained. An energy harvesting layer was then applied and the resulting system was adhered together by the application of pressure. As an alternative to the gas filled microspheres, a chemical blowing agent such as an azodicarbonamide could be used.

### EXAMPLE 12

In this Example, an alternative preparation of flooring material 800B as depicted in Figure 8 is described. In this embodiment, the flooring material lacks the honeycomb structure.

Plastisol A, prepared as described in Preparatory Example 1 but with the addition of gas filled microspheres in the form of Expancel (trademark) manufactured by Akzo Nobel to form a deformable plastics material was spread coated on a substrate layer to a thickness of 3mm by knife over roller. The substrate layer was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers. An energy harvesting layer was then applied and the resulting system was laminated together by the application of heat and pressure. As an alternative to the gas filled microspheres, a chemical blowing agent such as an azodicarbonamide could be used.

## Claims

1. An energy harvesting flooring material comprising a layer of synthetic material, an energy harvesting layer and a layer of conductive material.

2. A flooring material as defined in Claim 1 which comprises one or more piezoelectric materials.

3. A flooring material as defined in Claim 1 or Claim 2 wherein the energy harvesting layer comprises one or more conductive materials.

4. A flooring material as defined in any one of the preceding Claims wherein the layer of conductive material is metal or of a conductive polymeric material or adhesive; preferably the conductive material comprises a conductive ink.

5. A flooring material as defined in any one of the preceding Claims wherein the layer of conductive material is a printed layer.

6. A flooring material as defined in any one of the preceding Claims wherein the energy harvesting layer comprises a protective layer.

7. A flooring material as defined in any one of the preceding Claims wherein the flooring material comprises a protective coating layer

8. A flooring material as defined in any one of the preceding Claims wherein the flooring material is a non-slip flooring material.

9. A flooring material as defined in any one of the preceding Claims wherein the flooring material comprises a decorative layer.

10. A flooring material as defined in any one of Claims 1 to 6 wherein the flooring material is in the form of underlay for placing under conventional flooring material.

11. A flooring material as defined in Claim 9 wherein the flooring material comprises a support structure.

12. An energy harvesting flooring system comprising a flooring material as defined in any one of claims 1 to 11, a rectifier and an electrical storage device.

13. A flooring system as defined in Claim 12 wherein the energy harvesting flooring system comprises an electrically powered device to be powered by the electrical storage device.

14. A flooring system as defined in Claim 12 or Claim 13 wherein the electrical storage device is provided in a wall or ceiling.
